# EUROPÄISCHE PATENTSCHRIFT

(11) **EP 3 839 299 B1**
(45) Veröffentlichungstag und Bekanntmachung des Hinweises auf die Patenterteilung: **24.05.2023**
(21) Anmeldenummer: 20215416.7
(22) Anmeldetag: 18.12.2020
(51) Int. Cl.: F16J 15/3268, F16J 15/3232, F16J 15/3276

(54) **RADIALWELLENDICHTUNG, FALTENBALGFLANSCH UND MONTAGEVERFAHREN HIERFÜR**
RADIAL SHAFT SEAL, BELLOWS FLANGE AND ASSEMBLY METHOD FOR SAME
JOINT D'ÉTANCHÉITÉ D'ARBRE RADIAL, BRIDE DE GAINE D'ÉTANCHÉITÉ ET PROCÉDÉ DE MONTAGE CORRESPONDANT

(30) Priorität: 19.12.2019 DE 102019135075
(43) Veröffentlichungstag der Anmeldung: 23.06.2021
(73) Patentinhaber: KRONES AG, 93073 Neutraubling (DE)
(72) Erfinder: Schmidbauer, Simon, 93073 Neutraubling (DE); Schoenfelder, Markus, 93073 Neutraubling (DE)
(74) Vertreter: Nordmeyer, Philipp Werner

(56) Entgegenhaltungen:
- US-A- 2 587 405
- US-A1- 2019 113 141

## Beschreibung

### Technisches Gebiet

Die vorliegende Erfindung betrifft eine Radialwellendichtung zur Abdichtung einer in einem Gehäuse gelagerten Welle, die einen Dichtring mit einer auf seiner Außenseite umlaufenden Aussparung zur Aufnahme einer ringförmigen Sicherungsklammer umfasst. Die Erfindung betrifft ferner einen Faltenbalgflansch sowie ein Montageverfahren zur Montage eines solchen.

### Stand der Technik

In Abfüllanlagen, insbesondere in Getränkeabfüllanlagen, werden häufig Behälter innerhalb eines Reinraums befüllt und verschlossen, um die Behälter bei definierten Umgebungsbedingungen zu befüllen und verschließen zu können. Auf diese Weise können auch besonders keimempfindliche Produkte abgefüllt werden.

Die im Reinraum angeordneten Verschließköpfe zum Aufbringen von Behälterverschlüssen werden dabei üblicherweise über Faltenbalge gegenüber der Umgebung außerhalb des Reinraums abgedichtet. Die Verwendung der Faltenbalge ermöglicht es dabei, die Verschließköpfe entsprechend bewegen zu können, um das Aufbringen der Verschlüsse zu ermöglichen, wobei aber gleichzeitig die hygienisch einwandfreie Abdichtung gegenüber der Umgebung aufrecht erhalten wird.

Die Abdichtung an den einzelnen Faltenbalgen erfolgt dabei zur Abdichtung von Drehdurchgängen in der Regel mittels eines speziellen Radialwellendichtrings, welcher zusammen mit Rillenkugellagern gegen einen Absatz in eine Metallhülse eingepresst wird. Die Metallhülse wird anschließend als ein Modul bestehend aus Dichtung und Lagerung durch den Faltenbalg hindurch gesteckt und von außen mit einer Überwurfmutter befestigt.

Da bei den bekannten Abdichtungen die Hülse jeweils durch den Faltenbalg durchgesteckt werden muss, kann dessen Innendurchmesser nicht direkt an die durch den Faltenbalg verlaufende Welle, angepasst werden. Der Faltenbalg erfordert also aufgrund des Montagevorgangs der Hülse einen deutlich größeren Durchmesser.

Die US 2019/0113141 A1 beschreibt eine Radialwellendichtung gemäß dem Oberbegriff des Anspruchs 1.

### Darstellung der Erfindung

Ausgehend von dem bekannten Stand der Technik ist es eine Aufgabe der vorliegenden Erfindung, eine verbesserte Radialwellendichtung, einen verbesserten Faltenbalgflansch sowie ein verbessertes Montageverfahren für einen solchen Faltenbalgflansch bereitzustellen.

Die Aufgabe wird durch eine Radialwellendichtung zur Abdichtung einer in einem Gehäuse gelagerten Welle mit den Merkmalen des Anspruchs 1 gelöst. Vorteilhafte Weiterbildungen ergeben sich aus den Unteransprüchen, der Beschreibung und den Figuren.

Entsprechend wird eine Radialwellendichtung zur Abdichtung einer in einem Gehäuse gelagerten Welle vorgeschlagen, welche einen Dichtring mit einer auf seiner Außenseite umlaufenden Aussparung zur Aufnahme einer ringförmigen Sicherungsklammer umfasst. Erfindungsgemäß umfasst die Radialwellendichtung eine radial nach außen vorgespannte, ringförmige Sicherungsklammer, die in einer Montageposition zum Einführen des Dichtrings in das Gehäuse vollständig in der Aussparung aufnehmbar ist und die in einer Einbauposition teilweise radial über die Aussparung hinausragt.

Die ringförmige Sicherungsklammer ist radial nach außen vorgespannt, kann aber radial nach innen gedrückt werden, insbesondere, um diese in eine Montageposition zu bringen. Demnach ist unter einer Montageposition hier eine Position zu verstehen, in der die ringförmige Sicherungsklammer nicht über die Aussparung hinausragt. In dieser Montageposition kann die Dichtung zusammen mit der Sicherungsklammer in den Faltenbalgflansch eingeschoben werden.

Dies kann beispielsweise der Fall sein, wenn die ringförmige Sicherungsklammer manuell zusammengedrückt wird, oder wenn der Dichtring mit aufgebrachter ringförmiger Sicherungsklammer in ein Gehäuse eingeschoben wird und der ringförmigen Sicherungsklammer noch keine Flanschnut gegenübersteht, in die ringförmige Sicherungsklammer sich aufgrund ihrer radial nach außen gerichteten Vorspannung über die Aussparung hinaus erstrecken kann. Entsprechend ist hier unter einer Einbauposition eine Position zu verstehen, in der sich die ringförmige Sicherungsklammer aufgrund ihrer radial nach außen gerichteten Vorspannung über die Aussparung hinaus erstreckt. In dieser Position kann die Sicherungsklammer dann in eine Flanschnut eingreifen und auf diese Weise die Dichtung in dem Flansch sichern.

Dies kann beispielsweise der Fall sein, wenn gar keine radialen Kräfte auf die vorgespannte ringförmige Sicherungsklammer einwirken. Gleichwohl kann dies eintreten, wenn die ringförmige Sicherungsklammer so weit in ein Gehäuse eingeschoben ist, dass ihr eine Flanschnut gegenübersteht, in die sie sich aufgrund ihrer radial nach außen gerichteten Vorspannung über die Aussparung hinaus erstrecken kann. In dieser Einbauposition verbleibt ein Rest an Vorspannung in der ringförmigen Sicherungsklammer, um eine spielfreie Positionierung der ringförmigen Sicherungsklammer zu gewährleisten.

Dadurch, dass die radial nach außen vorgespannte, ringförmige Sicherungsklammer in einer Montageposition zum Einführen des Dichtrings in das Gehäuse vollständig in der Aussparung aufnehmbar ist und in einer Einbauposition teilweise radial über die Aussparung hinausragt, kann die Radialwellendichtung direkt von außen in einen integrierten Sitz im Faltenbalg montiert werden. Die Befestigung des Dichtrings bzw. die axiale Sicherung der Lagerung erfolgt mithin über die ringförmige Sicherungsklammer. Es sind weder Metallhülse noch Überwurfmutter nötig, um die Radialwellendichtung in einem Gehäuse, etwa in einem Faltenbalgflansch, zu installieren. Mithin können teure Bauteile eingespart und Kosten signifikant verringert werden. Zudem kann der Durchmesser des Gehäuses, etwa eines Faltenbalgflansches, näher an den Durchmesser der Welle angepasst werden.

Die ringförmige Sicherungsklammer ist dabei in den Dichtring eingebettet. Dies hat den Vorteil, dass die ringförmige Sicherungsklammer nicht im Reinraum angeordnet ist. Mithin wird dadurch eine hygienische, axiale Sicherung der Radialwellendichtung erzielt.

Im Sinne der vorliegenden Erfindung ist unter einer ringförmigen Sicherungsklammer eine Sicherungsklammer zu verstehen, die eine im Wesentlichen kreis- bzw. ringförmige Außenkontur aufweist. Mithin können vollständige Ringe und als Ringsegmente ausgeführte Sicherungsklammern ringförmige Sicherungsklammern darstellen.

Gemäß einer bevorzugten Weiterbildung ist in der Einbauposition zwischen dem Dichtungsring und der ringförmigen Sicherungsklammer in zumindest einer axialen Richtung ein Formschluss ausgebildet, vorzugsweise in beide axialen Richtungen.

Aufgrund des Formschlusses kann die Positionierung des Dichtrings, d. h. die axiale Sicherung des Dichtrings, weiter verbessert werden. Vorteilhaft ist ferner, dass dadurch Spalte in axialer Richtung zwischen Dichtring und ringförmiger Sicherungsklammer vermieden werden, wodurch ein Transport von Fremdstoffen über diese Wirkflächenpaare weitestgehend ausgeschlossen werden kann. Dadurch wird die Hygiene der axialen Lagersicherung erhöht.

Gemäß einer bevorzugten Weiterbildung ist die ringförmige Sicherungsklammer derart radial nach außen vorgespannt, dass diese manuell auf den Dichtring angeordnet werden kann. Mithin kann die Vorspannung so groß gewählt werden, dass eine Finger-Daumen Betätigung, wie etwa in DIN EN 894-3:2000 definiert, möglich ist.

Dies hat den Vorteil, dass keine weiteren Hilfsmittel für die Montage des Dichtrings und der ringförmigen Sicherungsklammer sowie der Montage der Radialwellendichtung an sich notwendig sind. Ferner wird dadurch die Gefahr der Beschädigung des Dichtrings während dessen Montage deutlich reduziert.

Gemäß der Erfindung weist die Aussparung eine umlaufende Dichtringnut und eine sich in die Dichtringnut öffnende, radial verlaufende Dichtringöffnung auf.

Dies hat den Vorteil, dass die ringförmige Sicherungsklammer sowohl in der Montageposition als auch in der Einbauposition ferner durch die sich in die Dichtringnut öffnende, radial verlaufende Dichtringöffnung nach innen erstrecken kann. Mithin kann über die sich in die Dichtringnut öffnende, radial verlaufende Dichtringöffnung die ringförmige Sicherungsklammer eindeutig positioniert werden und ist sowohl über die Innenseite als auch die Außenseite des Dichtrings einsehbar bzw. erreichbar.

Gemäß einer bevorzugten Weiterbildung weist der Dichtring zwei axial versetzte Dichtlippen auf, wobei die ringförmige Sicherungsklammer axial zwischen den zwei Dichtlippen angeordnet ist. Dies hat den Vorteil, dass dadurch stets gewährleistet wird, dass die ringförmige Sicherungsklammer nicht in Kontakt mit den jenseits der Dichtung liegenden Systemaußengrenzen des Dichtrings in Kontakt kommt, insbesondere nicht mit einem in der Umgebung vorhandenen Reinraum.

Gemäß einer bevorzugten Weiterbildung weist die ringförmige Sicherungsklammer an jedem Ende eine Lasche auf, die durch die Dichtringöffnungen hindurch mit einem Montagewerkzeug gegriffen werden können, um die ringförmige Sicherungsklammer entgegen der Vorspannung aus der Einbauposition zu bringen, wobei die Laschen vorzugsweise in eine axiale Richtung ausgebildete Vorsprünge aufweisen.

Grundsätzlich besteht ein Bedürfnis, auf Bohrungen zum Greifen der ringförmigen Sicherungsklammer zu verzichten, wodurch das die Radialwellendichtung insgesamt hygienischer ausgeführt werden kann.

Das Vorsehen von Laschen bietet darüber hinaus sowohl bei der Montage als auch der Demontage der Radialwellendichtung Vorteile. Hinsichtlich der Montage kann die ringförmige Sicherungsklammer, wenn sich diese in der Montageposition befindet, über die Innenseite des Dichtrings hervorstehenden Laschen etwa mit einem Montagewerkzeug in die Einbauposition geführt werden.

Hinsichtlich der Demontage können die Laschen von innen durch die Dichtringöffnung mit einem Montagewerkzeug entgegen der nach radial außen gerichteten Vorspannung der ringförmigen Sicherungsklammer zusammengedrückt werden, bis die ringförmige Sicherungsklammer sich vollständig in der umlaufenden Aussparung befindet und herausgezogen werden kann.

Unter einem Montagewerkzeug ist im Sinne der Erfindung eine Zange zu verstehen, insbesondere eine Flachrundzange, eine abgewinkelte Flachrundzange oder jedes andere Standardwerkzeug, dass geeignet ist von innen durch die Dichtringöffnung des Dichtrings die Laschen der ringförmigen Sicherungsklammer entgegen deren nach radial außen gerichteten Vorspannung zusammenzudrücken.

Dadurch, dass die Laschen vorzugsweise in eine axiale Richtung ausgebildete Vorsprünge aufweisen, kann ferner gewährleistet werden, dass die ringförmige Sicherungsklammer nicht verkehrt herum auf den Dichtring aufgesetzt werden kann. Mithin wird dadurch die Montagesicherheit erhöht.

Gemäß einer weiteren Ausgestaltung weist die ringförmige Sicherungsklammer an jeder Lasche eine Abschrägung auf, die so ausgebildet ist, dass beim Einführen der Welle ein Verschieben der ringförmigen Sicherungsklammer nach radial außen gewährleistet ist.

Während der Montage der Radialwellendichtung kann der Fall auftreten, dass nachdem die ringförmige Sicherungsklammer manuell auf dem Dichtring angebracht wurde, die ringförmige Sicherungsklammer zwar in der Aussparung des Dichtrings, jedoch noch nicht vollständig in eine vorgesehene Dichtringnut der umgebenen Struktur eingerastet ist, also die Einbauposition nicht vollständig eingenommen hat. In diesem Zustand stehen die Laschen der ringförmigen Sicherungsklammer radial nach innen aus dem Dichtring heraus.

Der Vorteil dieser Abschrägungen ist nun, dass beim Einführen der Welle über die Vorwärtsbewegung der Welle ein Verschieben der ringförmigen Sicherungsklammer über deren Abschrägungen an den Laschen ermöglicht wird, bis ein vollständiges Einrasten der ringförmigen Sicherungsklammer stattfindet. Im Ergebnis führt dadurch auch eine unsorgfältige Montage nicht zum Funktionsverlust der Radialwellendichtung.

Gemäß einer bevorzugten Weiterbildung ist die ringförmige Sicherungsklammer ein unterbrochener Ring mit einem Öffnungswinkel α, wobei der Öffnungswinkel derart klein gewählt ist, dass eine Montage bzw. Demontage der ringförmigen Sicherungsklammer gerade noch möglich ist.

Je kleiner der Öffnungswinkel, desto kleiner kann die sich in die Dichtringnut öffnende, radial verlaufende Dichtringöffnung ausgebildet werden. Dadurch bleibt die Stabilität des Dichtrings weitestgehend erhalten. Die Dimensionierung des Öffnungswinkels hängt von den Innen- und Außendurchmessern des Dichtrings sowie den Innen- und Außendurchmessern der ringförmigen Sicherungsklammer sowie von den Werkstoffeigenschaften des Dichtrings und der ringförmigen Sicherungsklammer ab. Der minimale Öffnungswinkel kann dabei mit geringem Aufwand für die gegebenen Rahmenbedingungen herausgefunden werden. Ein minimaler Öffnungswinkel α kann etwa vorliegen, wenn nach Zusammendrücken, in der Montageposition, der ringförmigen Sicherungsklammer beide Enden der ringförmigen Sicherungsklammer einen Kontakt miteinander ausbilden.

Ein weiterer Vorteil des möglichst kleinen Öffnungswinkels ist, dass während der Montage und Demontage gleichmäßige Spannungsverhältnisse sowohl in der ringförmigen Sicherungsklammer als auch in den umgebenden Komponenten vorliegen.

Gemäß einer weiteren Ausgestaltung weist der Dichtring einen Kunststoff und/oder die ringförmige Sicherungsklammer einen metallischen Werkstoff auf.

Mithilfe eines Kunststoffes als Werkstoff bzw. Werkstoffbestandteil des Dichtrings kann eine ausreichende Flexibilität bzw. Elastizität des Dichtrings dahingehend gewährleistet werden, dass die Dichtfunktion des Dichtrings rein über die Werkstoffeigenschaften des Kunststoffs erzielt wird. Gleichwohl kann mithilfe eines metallischen Werkstoffs der ringförmigen Sicherungsklammer eine geeignete radial nach außen gerichtete Vorspannung der ringförmigen Sicherungsklammer erzielt werden.

Gemäß einer vorteilhaften Ausführungsform ist der Dichtring aus einem 3D Druckverfahren hergestellt. Dies hat den Vorteil, dass die Geometrie des Dichtrings besonders flexibel angepasst werden kann, ohne Rücksicht auf Herstellungs-spezifische Gestaltungszwänge nehmen zu müssen, wie sie etwa aus der Spritzgusstechnologie bekannt sind.

Die oben gestellte Aufgabe wird weiterhin durch einen Faltenbalgflansch gelöst. Eine vorteilhafte Weiterbildung des Faltenbalgflansches ergibt sich aus dem Unteranspruch sowie der vorliegenden Beschreibung und den Figuren.

Entsprechend wird ein Faltenbalgflansch vorgeschlagen, umfassend eine zylindrische Innenfläche mit zumindest einer Flanschnut, sowie eine vorstehend offenbarte Radialwellendichtung.

Erfindungsgemäß ist bei dem Faltenbalgflansch die ringförmige Sicherungsklammer in einer Einbauposition mit der Flanschnut in Eingriff bringbar, wodurch eine axiale Sicherung der Radialwellendichtung erfolgen kann.

Dadurch, dass die Radialwellendichtung bereits über die integrale ringförmige Sicherungsklammer axial gesichert ist, werden zusätzliche Bauteile zur axialen Sicherung, wie etwa eine Hülse oder eine Überwurfmutter nicht mehr benötigt, wodurch die Kosten signifikant reduziert werden. Zudem können die bei der Montage von Hülsen und Überwurfmutter üblichen Beschädigungen von Dichtringen vermieden werden. Darüber hinaus wird die Montage dahingehend erleichtert, dass nun weniger Teile montiert werden müssen und diese einfacher zu montieren sind. Ferner ist von Vorteil, dass ein Faltenbalgdurchmesser deutlich kleiner ausgeführt werden kann, da die Dichtung eine in radiale Richtung gegenüber herkömmlichen Technologien geringere Abmessung aufweisen kann.

Gemäß einer weiteren Ausgestaltung sind im Faltenbalgflansch ferner ein Radiallager, das an einen Anschlag des Faltenbalgflansches angrenzt, sowie zumindest ein dem Radiallager zugeordneter O-Ring und zumindest ein dem Dichtring zugeordneter O-Ring vorgesehen.

Vorteilhaft ist dabei, dass die gesamte Lagerung inklusive Radialwellendichtung manuell direkt von außen in einen integrierten Sitz im Faltenbalgflansch montiert werden kann und mittels eines Montagewerkzeugs demontiert werden kann. Durch die Integration des Lagersitzes in den Faltenbalgflansch werden die Hülse und die Überwurfmutter nicht mehr benötigt, wodurch die Kosten signifikant verringert werden.

Der Anschlag des Faltenbalgflansches kann beispielsweise eine Wellenschulter, ein Sicherungsring oder ein Anschlag aus einem angrenzenden Bauteil sein, etwa ein Deckel, der an die Faltenbalgflanschrichtung montiert ist.

Die oben gestellte Aufgabe wird weiterhin durch ein Montageverfahren zur Montage einer vorstehend offenbarten Radialwellendichtung mit den Merkmalen des Anspruchs 12 gelöst. Vorteilhafte Weiterbildungen des Verfahrens ergeben sich aus der vorliegenden Beschreibung und den Figuren.

Vorteilhafte Weiterbildungen des Verfahrens ergeben sich aus der vorliegenden Beschreibung und den Figuren.

Entsprechend wird ein Montageverfahren zur Montage einer vorstehend offenbarten Radialwellendichtung in einen vorstehend offenbarten Faltenbalgflansch vorgeschlagen.

Erfindungsgemäß umfasst das Montageverfahren die folgenden Schritte:
- Zusammendrücken der ringförmigen Sicherungsklammer einer Radialwellendichtung in eine Montageposition;
- Teilweises Einführen der Radialwellendichtung in den Faltenbalgflansch;
- Einführen der Welle in den Dichtring der Radialwellendichtung derart, dass ein Verschieben der Radialwellendichtung erfolgt, bis die ringförmige Sicherungsklammer In die Flanschnut einrastet und in eine Einbauposition kommt;
- Vorzugsweise weiteres Einführen der Welle in eine vorab definierte Arbeitsposition.

Vorteilhaft ist dabei, dass die Montage werkzeugfrei erfolgen kann. Mithin können Kosten eingespart werden und Kräfte, die ein Beschädigen der Radialwelldichtung hervorrufen könnten, können weitestgehend vermieden werden. Dadurch, dass die Radialwellendichtung keine Hülse und keine Überwurfmutter benötigt, ist die Komplexität deutlich geringer, wodurch der zeitliche Aufwand für die Montage reduziert werden kann. Ferner können dadurch Fehlmontagen besser vermieden werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Darstellung einer Radialwellendichtung;
- Figur 2: schematisch eine Schnittzeichnung durch einen Dichtring entlang einer Schnittebene A-A';
- Figur 3: schematisch eine perspektivische Darstellung einer ringförmigen Sicherungsklammer;
- Figur 4: schematisch eine Schnittzeichnung durch einen Faltenbalgflansch mit einer Radialwellendichtung entlang einer Schnittebene B-B'; und
- Figur 5: schematisch eine Querschnittszeichnung eines Faltenbalgflansches mit einer Radialwellendichtung entlang einer Schnittebene B-B' mit einer teilweise eingeführten Welle;

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

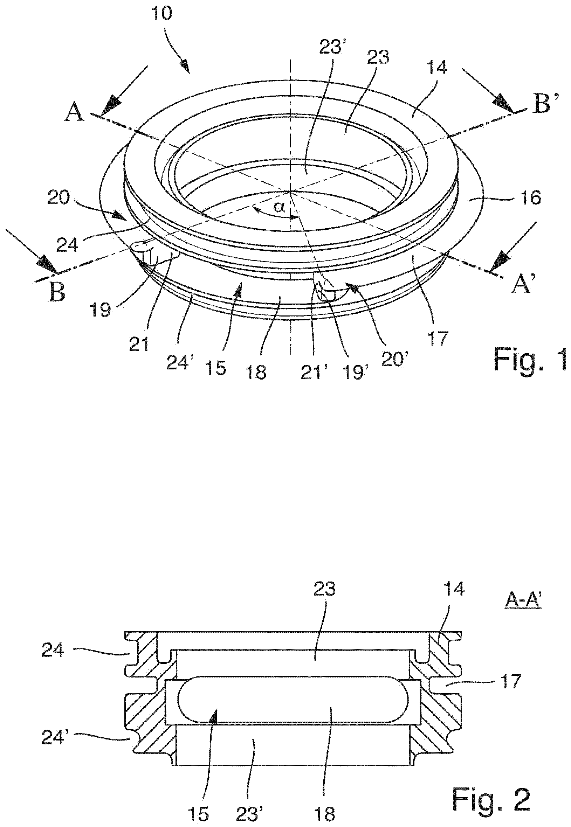

In Figur 1 ist schematisch eine perspektivische Darstellung einer Radialwellendichtung 10 gezeigt. Die Radialwellendichtung 10 umfasst einen Dichtring 14 mit einer montierten ringförmigen Sicherungsklammer 16. Die ringförmige Sicherungsklammer 16 ist in eine auf der Außenseite des Dichtrings 4 umlaufenden Aussparung 15 angeordnet. Die umlaufende Aussparung 15 weist eine von der ringförmigen Sicherungsklammer 16 verdeckte Dichtringnut 17 sowie eine sich in die Dichtringnut 17 öffnende, radial verlaufende Dichtringöffnung 18 auf. Die ringförmige Sicherungsklammer 16 ragt teilweise über die Aussparung 15 hinaus und befindet sich in einer Einbauposition.

Die ringförmige Sicherungsklammer 16 ist als ein unterbrochener Ring mit einem Öffnungswinkel α ausgeführt und ist in axialer Richtung zwischen zwei an der Innenseite des Dichtrings 14 ausgeführten Dichtlippen 23 und 23' des Dichtrings 14 angeordnet. An der Außenseite des Dichtrings 14 ist die ringförmige Sicherungsklammer 16 zwischen zwei Aufnahmen 24 bzw. 24' für jeweils einen dem Dichtring zugeordneten, nicht abgebildeten O-Ring angeordnet.

Darüber hinaus weist die ringförmige Sicherungsklammer 16 an deren beiden Enden 20 bzw. 20' jeweils eine Lasche 19 bzw. 19' auf, die sowohl in axialer Richtung ausgebildete Vorsprünge 21 bzw. 21' aufweisen und ferner radial nach innen vorstehen. In der in Figur 1 abgebildeten Ausführungsform ist der Dichtring 14 aus einem 3D-Druckverfahren hergestellt und weist einen Kunststoff auf. Die ringförmige Sicherungsklammer 16 weist einen metallischen Werkstoff auf.

Figur 2 zeigt schematisch einen Querschnitt durch den Dichtring 14 in einer Schnittebene A-A' in der in Figur 1 angedeuteten Blickrichtung. Die umlaufende Aussparung 15 umfasst zum einen die umlaufende Dichtringnut 17 und zum anderen eine sich in die Dichtringnut 17 öffnende, radial verlaufende Dichtringöffnung 18. Die umlaufende Aussparung 15 erstreckt sich axial zwischen den zwei an der Innenseite des Dichtrings 14 angeordneten Dichtlippen 23 bzw. 23'. Gleichwohl erstreckt sich der Dichtring 14 axial zwischen den zwei an der Außenseite des Dichtrings 14 angeordneten Aufnahmen 24 bzw. 24' für jeweils einen dem Dichtring zugeordneten, nicht abgebildeten O-Ring.

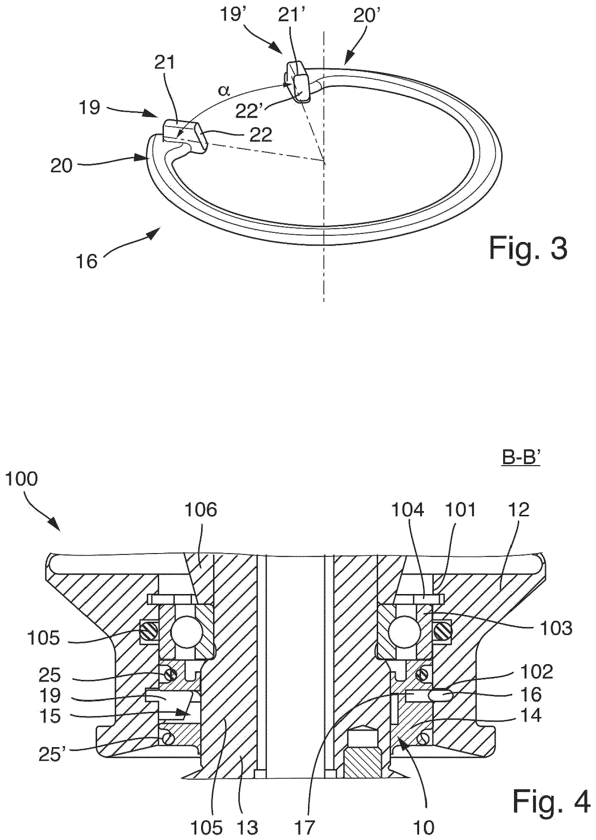

Figur 3 zeigt schematisch eine ringförmige Sicherungsklammer 16 in einer perspektivischen Darstellung. Die ringförmige Sicherungsklammer 16 ist als ein unterbrochener Ring mit einen Öffnungswinkel α ausgeführt. Der Öffnungswinkel α ist dabei derart klein gewählt, dass eine Montage bzw. Demontage der ringförmigen Sicherungsklammer 16 gerade noch möglich ist. Das bedeutet, dass nach Zusammendrücken - in die Montageposition - der ringförmigen Sicherungsklammer 16 beide Enden 20 bzw. 20' der ringförmigen Sicherungsklammer 16 einen Kontakt miteinander ausbilden.

An den beiden besagten Enden 20 bzw. 20' der ringförmigen Sicherungsklammer 16 sind Laschen 19 bzw. 19' angeordnet, die ferner jeweils einen in axiale Richtung ausgebildeten Vorsprung 21 bzw. 21' aufweisen. Über diese Vorsprünge 21 bzw. 21' kann die ringförmige Sicherungsklammer 16 entgegen der Vorspannung mittels eines Montagewerkzeugs aus der Einbauposition gebracht werden. Im umgekehrten Fall, um aus einer Montageposition in die Einbauposition gebracht werden zu können, etwa durch ein Verschieben radial nach außen durch eine Welle 12, weist die ringförmige Sicherungsklammer 16 an den Vorsprüngen 21 bzw. 21' jeweils an jeder Lasche 19 bzw. 19' eine Abschrägung 22 bzw. 22' auf.

Figur 4 zeigt eine schematische Schnittzeichnung durch einen Faltenbalgflansch 100 mit einer montierten Radialwellendichtung 10 entlang einer Schnittlinie B-B' in der in Figur 1 angedeuteten Blickrichtung. Die Radialwellendichtung 10 ist zwischen einem Gehäuse 12 und einer darin gelagerten Welle 13 in einer vollständig montierten Anordnung dargestellt. Demnach befindet sich der Dichtring 14 in einer axial vorgesehenen Position, welche dadurch gesichert wird, dass die ringförmige Sicherungsklammer 16 in einer Einbauposition teilweise radial über die Aussparung 15 hinausragt und mit dem darüber hinausragenden Teil im Eingriff mit einer Flanschnut 102 steht.

Dieser Zustand bleibt aufgrund der radial nach außen vorgespannten, ringförmigen Sicherungsklammer 16 so lange erhalten, bis diese mittels eines Montagewerkzeugs über die Laschen 19 bis zum Erreichen einer Montageposition zusammengedrückt wird, d. h. vollständig in der Aussparung 15 aufgenommen wird und der Dichtring 14 zusammen mit der ringförmigen Sicherungsklammer 16 aus dem Faltenbalgflansch 100 herausgezogen wird. Hierzu weist die Aussparung eine umlaufende Dichtringnut 17 auf, die radial so tief ausgeführt ist, dass die Montageposition der ringförmigen Sicherungsklammer 16 erreicht werden kann. Ferner weist die Aussparung 15 hierzu eine sich in die Dichtringnut 17 öffnende, radial verlaufende Dichtringöffnung 18 auf.

In dem in Figur 4 gezeigten Ausführungsbeispiel erfordert eine Demontage der Radialwellendichtung 10 zunächst das Entfernen der innenliegenden Welle 13. Dies erfolgt zunächst durch das Entfernen des Anschlags 104, der Wellenschulter 106, sowie durch das Entfernen des Radiallagers 103 zusammen mit dem dem Radiallager zugeordneten O-Ring 105. Alternativ kann das Radiallager 103 auch im eingebauten Zustand bleiben und die Welle 13 nach Entfernen der Wellenschulter 106 nach unten herausgezogen werden, wodurch die Radialwellendichtung 10 freigelegt ist und die ringförmige Sicherungsklammer 16 über die Dichtringöffnung 18 mit einem Montagewerkzeug zusammengedrückt werden kann.

Das Zusammendrücken der ringförmigen Sicherungsklammer 16 kann dabei über eine abgewinkelte Flachzange erzielt werden, die einfach an die Laschen 19 anzusetzen und gegen die Vorspannung der ringförmigen Sicherungsklammer 16 zusammenzudrücken ist. Sobald diese vollständig in der Aussparung 15 aufgenommen ist, liegt keine weitere axiale Sicherung der Radialwellendichtung 10 vor. Die dem Dichtring 14 zugeordneten O-Ringe 25 bzw. 25' dienen lediglich der Abdichtung des Dichtrings gegenüber der zylindrischen Innenseite 101 des Faltenbalgflansches 100.

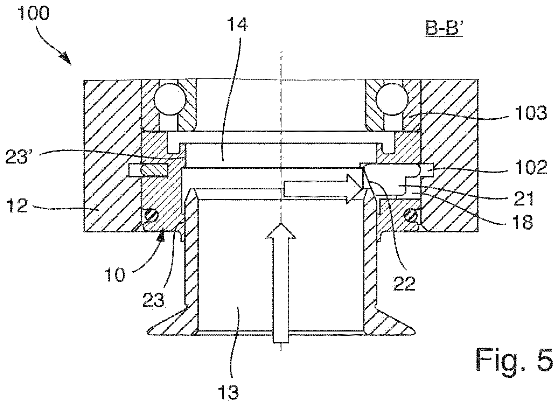

Figur 5 zeigt schematisch eine Querschnittszeichnung eines Faltenbalgflansches 100 mit einer Radialwellendichtung 10 entlang einer Schnittebene B-B' gemäß der in Figur 1 angedeuteten Blickrichtung mit einer teilweise eingeführten Welle 13.

Grundsätzlich befindet sich die Radialwellendichtung 10 bereits in der vorgesehenen Position, d.h. der Dichtring 14 ist bereits so weit in das Gehäuse 12 eingeschoben, dass die umlaufende Dichtringnut 17 genau gegenüber der Flanschnut 102 liegt. Mithin sollte die ringförmige Sicherungsklammer 16, die sich in der in Figur 5 abgebildeten Darstellung noch in der Montageposition befindet, bereits aufgrund ihrer radial nach außen gerichteten Vorspannung in die Einbauposition bewegen. Der dargestellte Fall entspricht mithin einem unbeabsichtigten Verkannten der ringförmigen Sicherungsklammer 16 gegenüber der Flanschnut 102 oder des Gehäuses 12.

Dadurch, dass in der Montageposition der ringförmigen Sicherungsklammer 16 deren Vorsprünge 21 radial nach innen durch die Dichtringöffnung 18 hervorstehen, wird beim Einführen der Welle 12 ein Kontakt zwischen Welle 12 und Vorsprung 21 ausgebildet. Über die am Vorsprung 21 ausgebildeten Abschrägung 22 erzeugt ein Vortrieb der Welle 12, gemäß Figur 5 in eine Richtung nach oben, eine radial nach außen gerichteten Kraft, die die ringförmige Sicherungsklammer 16 in die Einbauposition drängt. Nach erfolgtem Einrasten der ringförmigen Sicherungsklammer 16 in die Flanschnut 102 ist der Querschnitt des Innenrings 14 frei und die Welle kann weiter eingeschoben werden, bis diese einen Dichtkontakt mit den Dichtlippen 23 bzw. 23' ausbildet. Ist dies erreicht, ist die Radialwellendichtung 10 axial gesichert und abgedichtet.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen, der nur durch die Ansprüche begrenzt ist.

### Bezugszeichenliste

- α: Öffnungswinkel
- 10: Radialwellendichtung
- 12: Gehäuse
- 13: Welle
- 14: Dichtring
- 15: Umlaufende Aussparung
- 16: Ringförmige Sicherungsklammer
- 17: Dichtringnut
- 18: Dichtringöffnung
- 19, 19`: Laschen der ringförmigen Sicherungsklammer
- 20, 20': Enden der ringförmigen Sicherungsklammer
- 21, 21': Vorsprünge der Laschen
- 22, 22': Abschrägungen der Laschen
- 23, 23': Dichtlippe
- 24, 24': Aufnahme für Dichtring zugeordneten O-Ring
- 25, 25': Dichtring-zugeordneter O-Ring
- 100: Faltenbalgflansch
- 101: Zylindrische Innenfläche
- 102: Flanschnut
- 103: Radiallager
- 104: Anschlag
- 105: Radiallager-zugeordneter O-Ring
- 106: Wellenschulter

## Patentansprüche

1. Radialwellendichtung (10) zur Abdichtung einer in einem Gehäuse (12) gelagerten Welle (13), umfassend einen Dichtring (14) mit einer auf seiner Außenseite umlaufenden Aussparung (15) zur Aufnahme einer ringförmigen Sicherungsklammer (16), und
eine radial nach außen vorgespannte, ringförmige Sicherungsklammer (16), die in einer Montageposition zum Einführen des Dichtrings (14) in das Gehäuse (12) vollständig in der Aussparung (15) aufnehmbar ist und die in einer Einbauposition teilweise radial über die Aussparung (15) hinausragt,
**dadurch gekennzeichnet, dass**
die Aussparung (15) eine umlaufende Dichtringnut (17) und eine sich in die Dichtringnut (17) öffnende, radial verlaufende Dichtringöffnung (18) aufweist.

2. Radialwellendichtung (10) gemäß Anspruch 1, **dadurch gekennzeichnet, dass** in der Einbauposition zwischen dem Dichtring (14) und der ringförmigen Sicherungsklammer (16) in zumindest einer axialen Richtung ein Formschluss ausgebildet ist, vorzugsweise in beide axialen Richtungen.

3. Radialwellendichtung (10) gemäß Anspruch 1 oder 2, **dadurch gekennzeichnet, dass** die ringförmige Sicherungsklammer (16) derart nach radial außen vorgespannt ist, dass diese manuell auf dem Dichtring (14) angeordnet werden kann.

4. Radialwellendichtung (10) gemäß einem der vorstehenden Ansprüche, **dadurch gekennzeichnet, dass** der Dichtring (14) zwei axial versetzte Dichtlippen (23, 23') aufweist, wobei die ringförmige Sicherungsklammer (16) axial zwischen den zwei Dichtlippen (23, 23') angeordnet ist.

5. Radialwellendichtung (10) gemäß Anspruch 3, **dadurch gekennzeichnet, dass** die ringförmige Sicherungsklammer (16) an jedem Ende (20, 20') eine Lasche (19, 19') aufweist, die durch die Dichtringöffnung (18) hindurch mit einem Montagewerkzeug gegriffen werden können, um die ringförmige Sicherungsklammer (16) entgegen der Vorspannung aus der Einbauposition zu bringen, wobei die Laschen (19, 19') vorzugsweise in eine axiale Richtung ausgebildete Vorsprünge (21, 21') aufweisen.

6. Radialwellendichtung (10) gemäß Anspruch 5, **dadurch gekennzeichnet, dass** die ringförmige Sicherungsklammer (16) an jeder Lasche (19, 19') eine Abschrägung (22, 22') aufweist, die so ausgebildet ist, dass beim Einführen der Welle (13) ein Verschieben der ringförmigen Sicherungsklammer (16) nach radial außen gewährleistet ist.

7. Radialwellendichtung (10) gemäß einem der vorherigen Ansprüche, **dadurch gekennzeichnet, dass** die ringförmige Sicherungsklammer (16) ein unterbrochener Ring mit einem Unterbrechungswinkel (α) ist, der derart klein gewählt ist, dass eine Montage bzw. Demontage der ringförmigen Sicherungsklammer (16) gerade noch möglich ist.

8. Radialwellendichtung (10) gemäß einem der vorherigen Ansprüche, **dadurch gekennzeichnet, dass** der Dichtring (14) einen Kunststoff und/oder die ringförmige Sicherungsklammer (16) einen metallischen Werkstoff aufweist.

9. Radialwellendichtung (10) gemäß einem der vorherigen Ansprüche, **dadurch gekennzeichnet, dass** der Dichtring (14) aus einem 3D-Druckverfahren hergestellt ist.

10. Faltenbalgflansch (100), umfassend eine zylindrische Innenfläche (101) mit zumindest einer Flanschnut (102), sowie eine Radialwellendichtung (10) gemäß einem der vorherigen Ansprüche, **dadurch gekennzeichnet, dass** die ringförmige Sicherungsklammer (16) in einer Einbauposition mit der Flanschnut (102) in Eingriff bringbar ist, wodurch eine axiale Sicherung der Radialwellendichtung (10) erfolgen kann.

11. Faltenbalgflansch (100) nach Anspruch 10, **dadurch gekennzeichnet, dass** ferner ein Radiallager (103) vorgesehen ist, das an einen Anschlag (104) des Faltenbalgflansches (100) angrenzt, sowie zumindest ein dem Radiallager (103) zugeordneter O-Ring (105) und zumindest ein dem Dichtring (14) zugeordneter O-Ring (25, 25') vorgesehen ist.

12. Montageverfahren zur Montage einer Radialwellendichtung (10) nach einem der vorstehenden Ansprüche 1 bis 9 in einen Faltenbalgflansch (100) nach einem der Ansprüche 10 und 11, **gekennzeichnet durch** die Schritte
- Zusammendrücken der ringförmigen Sicherungsklammer (16) einer Radialwellendichtung (10) in eine Montageposition;
- Teilweises Einführen der Radialwellendichtung (10) in den Faltenbalgflansch;
- Einführen der Welle (13) in den Dichtring (14) der Radialwellendichtung (10) derart, dass ein Verschieben der Radialwellendichtung (10) erfolgt, bis die ringförmige Sicherungsklammer (16) in die Flanschnut (102) einrastet und in eine Einbauposition kommt;
- Vorzugsweise weiteres Einführen der Welle (13) in eine vorab definierte Arbeitsposition.

## Claims

1. Radial shaft seal (10) for sealing a shaft (13) mounted in a housing (12), comprising a sealing ring (14) with a circumferential recess (15) surrounding it on its outside for receiving an annular retaining clip (16), and
a radially outwardly biased, annular retaining clip (16) which, in an assembly position for inserting the sealing ring (14) into the housing (12), is completely receivable in the recess (15) and which, in an installation position, partially projects radially beyond the recess (15),
**characterised in that**
the recess (15) has a circumferential sealing ring groove (17) and a sealing ring opening (18) that opens into the sealing ring groove (17) and extends radially.

2. Radial shaft seal (10) according to claim 1, **characterised in that** in the installation position a form fit is formed between the sealing ring (14) and the annular retaining clip (16) in at least one axial direction, preferably in both axial directions.

3. Radial shaft seal (10) according to claim 1 or 2, **characterised in that** the annular retaining clip (16) is biased radially outwards in such a way that it can be placed manually on the sealing ring (14).

4. Radial shaft seal (10) according to any one of the preceding claims, **characterised in that** the sealing ring (14) has two axially offset sealing lips (23, 23'), the annular retaining clip (16) being arranged axially between the two sealing lips (23, 23').

5. Radial shaft seal (10) according to claim 3, **characterised in that** the annular retaining clip (16) has a lug (19, 19') at each end (20, 20') which can be gripped through the sealing ring opening (18) with an assembly tool in order to bring the annular retaining clip (16) out of the installation position against the biasing, the lugs (19, 19') preferably having projections (21, 21') formed in an axial direction.

6. Radial shaft seal (10) according to claim 5, **characterised in that** the annular retaining clip (16) has on each lug (19, 19') a chamfer (22, 22') that is configured to ensure that the annular retaining clip (16) is displaced radially outwards when the shaft (13) is inserted.

7. Radial shaft seal (10) according to any one of the previous claims, **characterised in that** the annular retaining clip (16) is an interrupted ring with an interruption angle (α) which is selected to be so small that assembly or disassembly of the annular retaining clip (16) is just possible.

8. Radial shaft seal (10) according to any one of the previous claims, **characterised in that** the sealing ring (14) comprises a plastic and/or the annular securing clip (16) comprises a metallic material.

9. Radial shaft seal (10) according to any one of the preceding claims, **characterised in that** the sealing ring (14) is manufactured by a 3D printing process.

10. Bellows flange (100) comprising a cylindrical inner surface (101) with at least one flange groove (102), and a radial shaft seal (10) according to any one of the preceding claims, **characterised in that** the annular securing clip (16) can be brought into engagement with the flange groove (102) in an installation position, whereby axial securing of the radial shaft seal (10) can occur.

11. Bellows flange (100) according to claim 10, **characterised in that** there is further provided a radial bearing (103), which adjoins a stop (104) of the bellows flange (100), and at least one O-ring (105) associated with the radial bearing (103) and at least one O-ring (25, 25') associated with the sealing ring (14) is provided.

12. Assembly method for assembling a radial shaft seal (10) according to any one of the preceding claims 1 to 9 in a bellows flange (100) according to any one of claims 10 and 11, **characterised by** the steps of
- compressing the annular retaining clip (16) of a radial shaft seal (10) into an assembly position;
- partially inserting the radial shaft seal (10) into the bellows flange;
- inserting the shaft (13) into the sealing ring (14) of the radial shaft seal (10) in such a way that the radial shaft seal (10) is displaced until the annular retaining clip (16) engages in the flange groove (102) and comes into an installation position;
- preferably inserting the shaft (13) further, into a predefined working position.

## Revendications

1. Joint d'étanchéité d'arbre radial (10) pour rendre étanche un arbre (13) logé dans un boîtier (12), comprenant un anneau d'étanchéité (14) avec un évidement (15) tournant sur son côté extérieur pour la réception d'une agrafe de fixation (16) annulaire, et
une agrafe de fixation (16) annulaire, précontrainte radialement vers l'extérieur qui peut être reçue dans une position de montage pour l'introduction de l'anneau d'étanchéité (14) dans le boîtier (12) complètement dans l'évidement (15) et qui dépasse dans une position d'installation partiellement radialement de l'évidement (15),
**caractérisé en ce que**
l'évidement (15) présente une rainure d'anneau d'étanchéité (17) tournante et une ouverture d'anneau d'étanchéité (18) s'étendant radialement, s'ouvrant dans la rainure d'anneau d'étanchéité (17).

2. Joint d'étanchéité d'arbre radial (10) selon la revendication 1, **caractérisé en ce que** dans la position d'installation entre l'anneau d'étanchéité (14) et l'agrafe de fixation (16) annulaire dans au moins un sens axial une liaison à complémentarité de formes est réalisée, de préférence dans les deux sens axiaux.

3. Joint d'étanchéité d'arbre radial (10) selon la revendication 1 ou 2, **caractérisé en ce que** l'agrafe de fixation (16) annulaire est précontrainte radialement vers l'extérieur de telle manière que celle-ci puisse être agencée manuellement sur l'anneau d'étanchéité (14).

4. Joint d'étanchéité d'arbre radial (10) selon l'une quelconque des revendications précédentes, **caractérisé en ce que** l'anneau d'étanchéité (14) présente deux lèvres d'étanchéité (23, 23') en déport axial, dans lequel l'agrafe de fixation (16) annulaire est agencée axialement entre les deux lèvres d'étanchéité (23, 23').

5. Joint d'étanchéité d'arbre radial (10) selon la revendication 3, **caractérisé en ce que** l'agrafe de fixation (16) annulaire présente sur chaque extrémité (20, 20') une languette (19, 19') qui peut être prise à travers l'ouverture d'anneau d'étanchéité (18) avec un outil de montage afin d'amener l'agrafe de fixation (6) annulaire dans le sens inverse à la précontrainte hors de la position d'installation, dans lequel les languettes (19, 19') présentent des saillies (21, 21') réalisées de préférence dans un sens axial.

6. Joint d'étanchéité d'arbre radial (10) selon la revendication 5, **caractérisé en ce que** l'agrafe de fixation (16) annulaire présente sur chaque languette (19, 19') un chanfrein (22, 22') qui est réalisé de sorte que lors de l'introduction de l'arbre (13), un décalage de l'agrafe de fixation (16) annulaire soit garanti radialement vers l'extérieur.

7. Joint d'étanchéité d'arbre radial (10) selon l'une quelconque des revendications précédentes, **caractérisé en ce que** l'agrafe de fixation (16) annulaire est un anneau interrompu avec un angle d'interruption (a) qui est choisi petit de telle manière qu'un montage ou démontage de l'agrafe de fixation (16) annulaire soit justement encore possible.

8. Joint d'étanchéité d'arbre radial (10) selon l'une quelconque des revendications précédentes, **caractérisé en ce que** l'anneau d'étanchéité (14) présente une matière plastique et/ou l'agrafe de fixation (16) annulaire présente un matériau métallique.

9. Joint d'étanchéité d'arbre radial (10) selon l'une quelconque des revendications précédentes, **caractérisé en ce que** l'anneau d'étanchéité (14) est fabriqué à partir d'un procédé d'impression 3D.

10. Bride de soufflet (100) comprenant une surface intérieure (101) cylindrique avec au moins une rainure de bride (102), ainsi qu'un joint d'étanchéité d'arbre radial (10) selon l'une quelconque des revendications précédentes, **caractérisée en ce que** l'agrafe de fixation (16) peut être amenée en prise dans une position d'installation avec la rainure de bride (102), par quoi une fixation axiale du joint d'arbre d'étanchéité d'arbre radial (10) peut être effectuée.

11. Bride de soufflet (100) selon la revendication 10, **caractérisée en ce qu'**un palier radial (103) est de plus prévu, lequel est contigu à une butée (104) de la bride de soufflet (100), ainsi qu'au moins un joint torique (105) associé au palier radial (103) et au moins un joint torique (25, 25') associé à l'anneau d'étanchéité (14).

12. Procédé de montage pour le montage d'un joint d'étanchéité d'arbre radial (10) selon l'une quelconque des revendications précédentes 1 à 9 dans une bride de soufflet (100) selon l'une quelconque des revendications 10 et 11, **caractérisé par** les étapes consistant à
- compresser l'agrafe de fixation (16) annulaire d'un joint d'étanchéité d'arbre radial (10) dans une position de montage ;
- introduire partiellement le joint d'étanchéité d'arbre radial (10) dans la bride de soufflet ;
- introduire l'arbre (13) dans l'anneau d'étanchéité (14) du joint d'étanchéité d'arbre radial (10) de telle manière qu'un décalage du joint d'étanchéité d'arbre radial (10) soit effectué jusqu'à ce que l'agrafe de fixation (16) annulaire s'encliquette dans la rainure de bride (102) et vienne dans une position d'installation ;
- de préférence poursuivre l'introduction de l'arbre (13) dans une position de travail définie au préalable.
